# EUROPEAN PATENT SPECIFICATION

(11) **EP 0 964 101 B1**
(45) Date of publication and mention of the grant of the patent: **31.03.2004**
(21) Application number: 98112440.7
(22) Date of filing: 06.07.1998
(51) Int. Cl.: E01H 1/08, B24C 3/06, B24C 9/00

(54) **Machine for shot-peening treatment of surfaces**
Mobile Schleuderstrahlmaschine zur Bearbeitung von Oberflächen
Machine mobile pour le traitement de surfaces par projection de matériau granulaire projeté à grande vitesse

(30) Priority: 02.06.1998 CH 118998
(43) Date of publication of application: 15.12.1999
(73) Proprietor: Trisha Anstalt, Vaduz, 6900 Massagno-Lugano (CH)
(72) Inventor:
(74) Representative: KUHNEN & WACKER

(56) References cited:
- DE-A- 4 226 680
- FR-A- 2 223 514
- FR-A- 2 342 821
- FR-A- 2 374 140
- GB-A- 2 203 369
- US-A- 4 433 511
- US-A- 5 291 697
- US-A- 5 657 876

## Description

The present invention relates to a mobile or self-propelled shot-peening machine with high performance for the treatment of surfaces consisting of bituminous mix, concrete or iron, by bombarding with steel microballs so as to obtain roughening, brightening, cleaning, degreasing, bushhammering of said road carpet surfaces in the maintenance, redevelopment or construction of roads, motorways, tracks, airports, bridges and iron or concrete structures.

Skidding roadbed is the main ground of traffic problems, mainly on wet paving. The essential targets to be reached for increasing grip are substantially based on three intervention principles: to regenerate roughness of the road surfaces; to allow water to flow assuring drainage between tire and road surface, so as to obtain evacuation thereof; to assure a dry contact between tire and surface granulate by breaking the film existing on the mix surface.

Road carpets after a more or less long period under traffic may show characteristics of surface wear and low grip, so as to cause serious dangers for the users, longitudinal and transversal skidding. The road surface, although it does not yet show serious deformations, tracks, potholes and like, that is being still structurally sound, may be worn, the surface bituminous paste may disappear, the aggregate grains can be too smooth or the surface may be clogged by scraps of dust, tire rubber and so on until it becomes totally unsuitable for modern traffic. Especially in case of rain there is a big danger for splash, visibility (missing evacuation of water, blinding) and/or aquaplaning.

The consequent slipperiness on roads, motorways, bends and race tracks is unfortunately the ground of many serious accidents, for which the bodies owners of the road or charged of its maintenance are more and more summoned according to the court rule, to bear responsibility or joint responsibility . The object of the invention is to carry out a machine allowing to operate techniques adapted to clean efficiently and to restore the required features of grip and surface drainage of such pavings, without making recourse to a complete rebuilding of the wearing layer or of the entire road structure. The machine according to the invention indeed allows to obtain said results by roughening with shot-peening at high performance.

There were several attempts in the past to attain the targets of the three above mentioned principles of intervention among which the following can be quoted: longitudinal or transversal scoring, especially of concrete slabs, by means of multiple diamond saws, laying of thin layers of special bituminous mixes (micro-seal, enduits superficiels, and so on).

These methods have specific limits because they restore indeed a good macro roughening, but require big interventions and generally show some drawbacks, for instance sound level, resistance to frost or heavy traffic, safety of motorcycles and so on, and lack of valid conclusive trials.

On the contrary the object of the present invention is a machine allowing an innovative, safe process of easy accomplishment and without serious repercussions on the road, namely roughening of the surface by a shot-peening machine with high performance. It is not possible to establish for certain the start of the technique with shot-peening machines. In Italy the first manufacturer of abrasive was Abrasivi Metallici S.p.A. in the year 1956. The first plants where fixed shot-blasting plants and were used for removal of blast furnace slags or burrs and flashes of various iron and steel products, caused by molds, and for this reason the plants were fixed, almost always placed inside big works.

The success obtained by this treatment as the years went by caused their use to be extended in the construction, renovation field, platforms and oil tanks and finally in the road field. This caused in turn the subdivision into two categories, namely fixed shot-peening plants and self -propelled shot-peening plants. The big industry of the fixed shot-peening plants up to now did not show interest in studying, widening and carrying out self-propelled plants. The corresponding market was held by several artisans who tried to use more or less the same basic conception, changing only some aesthetic components in order to avoid rise of production costs.

Nowadays in Europe there is a reduced number of some units of manufacturers of shot blasting machines not intended for fixed plants; they are known as Blastrac, Trimmer, Sonnimax and their conception is more or less similar as already mentioned. They are electric machines, thus non self-contained, and can cover surfaces from 30 to 80 cm per pass; they were designed for concrete so that their main use is generally in the construction field. The interventions are occasional and mainly used for removing road signalizations but in view of their unstable balance and lack of necessary measures, they cannot dispose of the waste removed from the ground so that the operator is obliged to carry out this operation from time to time manually with great waste of time. They consist of two units called shot-peening unit and exhauster unit; when they must operate far from a power source they need a power generator as they are not self-contained.

Other industrial artisans strived their production in the road field but with poor results, because in this field considerable experience is required in view of the various types of asphalt and the different behaviour of the several types of bitumen when treating by sand blasting, the investments being also considerable. If the experiences up to now had in this field by the manufacturers of the latter machines are examined, one can see that they restricted themselves to produce single samples because the results were always poor. The first Italian enterprise to carry out such a prototype was Montanari with headquarters in Parma. Their system had an absolute novelty in the field of metal shot blasting machines, that is to operate on wet surfaces; indeed if it did not rain, it was necessary to wet the surface to be treated because their machine was not provided with an exhauster and therefore the recovery of dust did not occur at the same time of the treatment, but it was carried out subsequently by a traditional sweeper; the machine recovered only the abrasive by means of a magnet. For the actuation of the turbines an explosion engine with hydraulic transmission was used. In view of the clear drawbacks occurred because of the project planning, after some attempts of improvement without substantial modifications, this enterprise abandoned this field.

In order to find another enterprise in this field one must look to Germany; here the company Falkestein, with its team tried to develop a project simply joining three turbines of 60 cm each so as to cover a surface of 180 cm but with poor yield, because the machine had a good operation only on concrete while on the asphalt it gave negligible results. In view of an accident during the trials the machine underwent irreparable damages and the project was abandoned. Also the latter machine was actuated by an explosion engine with hydraulic transmission.

All the self-propelled shot blasting machines excepting those made by the company Montanari, used the same working conception, namely: the abrasive starts from a tank and through a tube flows inside the diffuser. Here through an opening in the cup reaches the turbine blades and from them it is projected reaching the surface to be treated for being immediately sucked again and taken again to the tank. Here a baffle made in the cover brakes the flow of the air-abrasive-impurities mixture, compelling the heavier parts to fall downwards, namely into the tank, while in the upper part there is a slot allowing to the remaining portion of air and impurities to reach through a tube the exhauster where the cycle ends with the separation of dust from air. As this type of machine has a very limited re-circulation of the abrasive and a limited system of separation between abrasive and impurities, it is possible to see the following drawbacks: a) excessive temperature (overheating) and b) presence of impurities in the abrasive. This causes an immediate wear of the parts contacting the abrasive so as to cause rise of the maintenance costs.

Document US 4,433,511 discloses a mobile apparatus for treating surfaces by abrasive blasting which consists of a mobile housing having self-propelled endless tracks or treads for moving over the surface to be treated. The housing has a reservoir for abrasive particles and a rotary wheel which blades operable on rotation to throw the abrasive particles against the surface to be treated to abrade or etch the surface. The rotary wheel is operable to throw the abrasive particles at a high velocity at an angle to the surface. A return passage for the particles has an opening at the angle of rebound of the particles extending toward the reservoir. A plurality of trays receives the recirculating particles, fill with particulate material and then spill into the reservoir. Particulate material on the trays absorbs kinetic energy from the particles to prevent further rebounding. The particles spill from the trays in a stream or sheet intersected by a stream of air removed overhead adjacent the trays which separates coarser particulate debris from the abrasive particles en route back to the reservoir.

Document FR 2 374 140 discloses a mobile shot-peening machine having the features of the preamble of claim 1.

On the basis of the acquired experience and tests carried out during a long experimental period, applicant through its team of technicians carried out a new machine which is the subject matter of the present invention, allowing a method which is perfectly suitable for the most stringent requirements in the treatment of the various types of surfaces, bitumen, asphalt, concrete and iron.

Going widely behind the limits up to now reached by the machines of the prior art, hereinafter the improvements carried out with the process obtained by the machine of the present invention, its structure and its operation will be described. The improvements accomplished are substantially the following: a) feeder of fresh air from outside; b) widening and extending the ducts for the used mixture; c) introduction of a cyclone for treating the mixture; d) introduction of a screen: e) increasing of the tank capacity; f) expansion of the exhausted group, filter washing, increase of their surfaces and filtering quality; g) expansion of the turbines.

Shot-peening, differently from abrasive shot blasting, is a process using steel balls for bombarding the covering surface; the machine according to the invention projects on the surface to be treated balls of a small diameter, namely microballs from 1.1 to 2 mm, hitting the surface with a very high velocity and with a precise angle of incidence. The balls bounce off, are recovered when rebounding by sucking them and mostly recycled cleaned and used again, while dust and fillers, coming from cleaning or waste of surface treatments, are separated, sucked and retained by dry filtering means in a bin that is then evacuated in a dump in order to avoid any kind of pollution. The impact of these microballs removes the soft surface parts of the bituminous mix bringing into relief the aggregate and creating a macro roughness. At the same time the aggregate beside being cleaned on the surface because it is micro hammered without being cracked, increases micro roughness. The obtained macro roughness allows a high surface drainage, aggregate into relief on the water flowing plane, reducing considerably the aquaplaning danger, as well as projection of water to the other vehicles, spray effect in case of rain, in addition to promote drastic reduction of sound emission or sound pollution, the micro roughness coming from irregular and indented shape taken by the aggregate into relief on the old surface in view of the shot-peening operation, cooperates in turn to a considerable increase of the friction coefficient with tires and therefore to their grip and traction.

To sum up the impact of the microballs of the shot-peening operation on the surface of mix or concrete has three main effects: cleaning of the surface from accumulated impurities; removal of a part of the bituminous or concrete matrix sealing the granulated aggregates so as to increase the macro roughness of the structure; roughening or fine bushhammering of said granulates, improving their micro-roughness however without causing dangerous micro-cracks.

The machine according to the invention allows to change the mechanical action of the shot-peening operation by regulating the velocity of balls projection and velocity of advancement of the machine itself.

Its effect on paving depends also from other factors to be taken into account in the regulation of the machine according to the invention by electronic means, some of these factors being: paving temperature: degree of hardness and other characteristics of aggregates; penetration index and aging of the bitumen respectively; granulometric composition of the mix.

At the same time output of the machine depends from its advancement velocity connected to the type of the surface to be treated and as above said is a function of the paving temperature, aggregate and bitumen hardness and granulometric curve of the mix.

The shot-peening effect is approximately similar either on bituminous mix or on concrete. It is also very homogeneous on the entire treated surface in view of the perfect accomplishment of the multi turbine technique. The process carried out by the machine of the invention allows to roughen stretches that become slippery without changing gradient and preserving also the horizontal road signalization: at the end of the shot-peening operation the road is immediately fit for traffic. In case of need the entire installation may be immediately removed without leaving any waste. Apparently roughening can be applied to structurally sound pavings where the mix composition is suitable; on the contrary it is not worth while to carry out the treatment on already cracked or deformed compromised stretches.

The present invention relates to a mobile self-propelled machine consisting of two connected units, the first driving the second, adapted to violently project steel microballs at very high velocity against the road surfaces through two special turbines aligned in the transversal sense, roughening the surface and recovering the balls when rebounding and recycling them, the second unit being provided with a sucking and filtering unit to recover dust and waste product in addition to a bin for their collection and evacuation; the mechanical action that can be regulated as function of the velocity of the machine and of the ball projection, produces re-establishment of the surface features both as to micro roughness and macro roughness.

More particularly the present invention relates to a mobile shot-peening machine for treating surfaces of bituminous mix, asphalt, concrete or iron, characterized by comprising a shot-peening unit and a sucking filtering unit joined together; the shot-peening unit consisting of: a) a feeder suitably finned and shaped to take and direct the flow of fresh air from outside; b) a group of aligned multi turbines of high power for projecting balls of small diameter at very high velocity; c) a set of ducts for passage of the mixture microballs, air and impurities, of increased diameter and length, suitably shaped so as to allow slowing down of the mixture flow; d) a cyclone for treating the mixture and obtaining a first separation of the heavier parts, namely microballs and fillers from the lighter ones such as air and dust; e) a high capacity separator for outflow of the heavier parts microballs and aggregate comprising a screen 4 for the separation, cleaning and recycling of microballs to the tank 41 from the charge of aggregate, debris and impurities to the container 42 for their evacuation; the aspirator unit consisting of: f) a bin where the following parts are housed: g) an aspirator or fan arranged in his box; h) filters for separating dust from air; i) means comprising a compressor, a compressed air tank, valve and washing tube, for washing filters with great increase of surfaces and filter quality; j) removable container for accumulating the fillers coming from the separation effected by the screen and deposition of dust coming from cyclone and by gravity through cleaning air from filters for their subsequent evacuation and ecologic treatment in dump; k) high power auxiliary and self-contained generator for distribution of the motion through a hydrostatic transmission and hydraulic pumps to the various units of the machine; I) a hydrostatic coupling for transmission of power to all the users of the machine through hydraulic pumps; m) electronic unit for controlling and regulating the various units or parts of the machine through detecting measuring and controlling sensors arranged therein.

The present invention relates also to the process as above described carried out by the shot-peening machine according to the invention.

The features of the machine of the invention are recited in claim 1. Further advantageous characteristics are indicated in the dependent claims.

A detailed description of an embodiment of the present invention will be given hereinafter as a non limiting example without impairing the general conception of the invention and with reference to the figures of the accompanying drawings in which:
Figure 1 is a view of the mobile shot-peening and microball recovering unit;
Figure 2 shows the sucking unit or exhauster mounted on a truck;
Figure 3 shows a back view of the mobile shot-peening unit;
Figure 4 is a top view of the bin of the sucking unit and its filtering elements;
Figure 5 is a general view of the two units of the machine, mobile shot-peening unite and exhauster the latter being mounted on a truck, respectively;
Figure 6 is a detailed view of the air feeder;
Figure 7 is a detailed view of the cyclone;
Figure 8 is a detailed view of the screen.

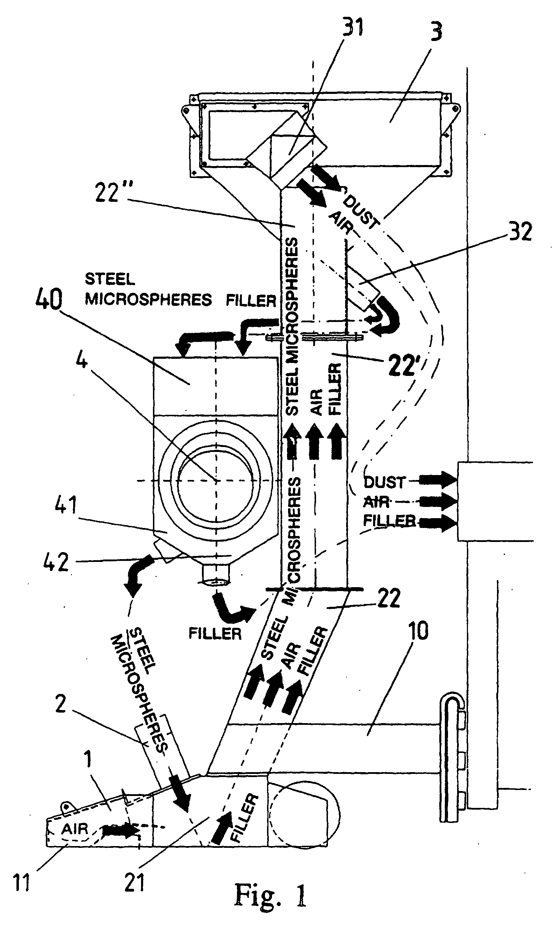

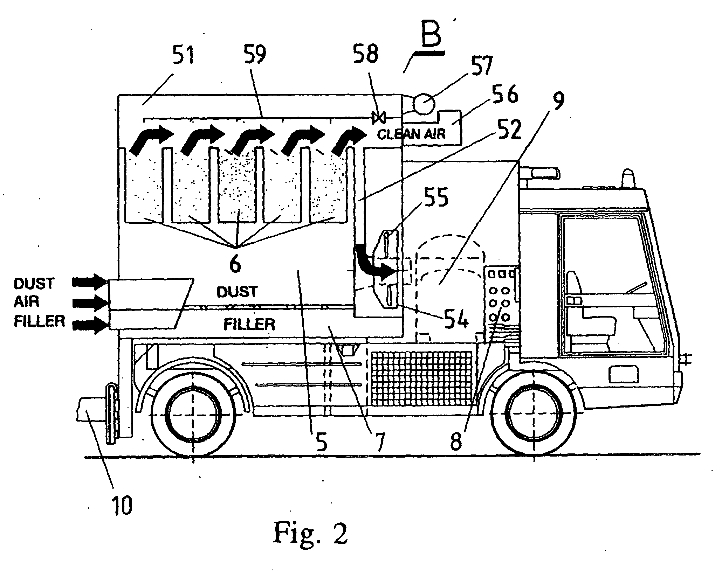

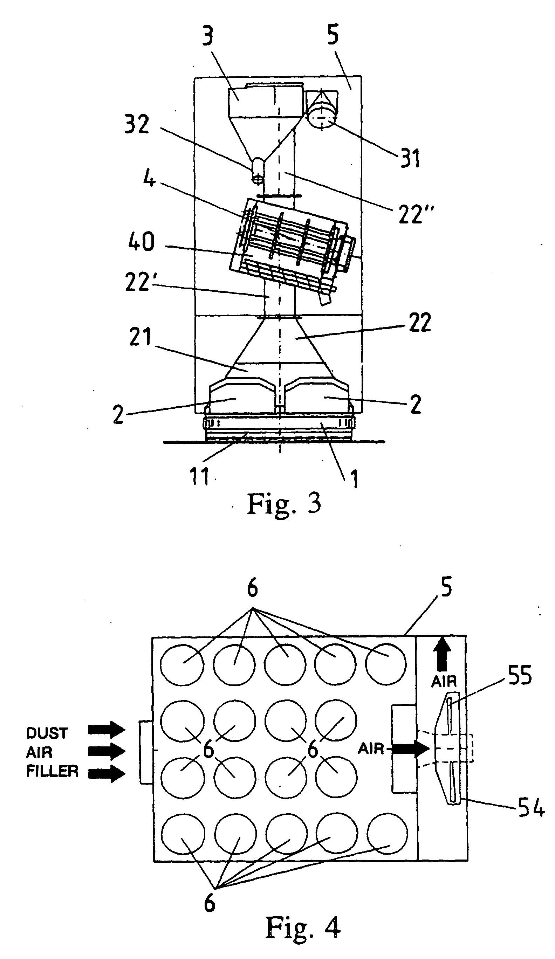

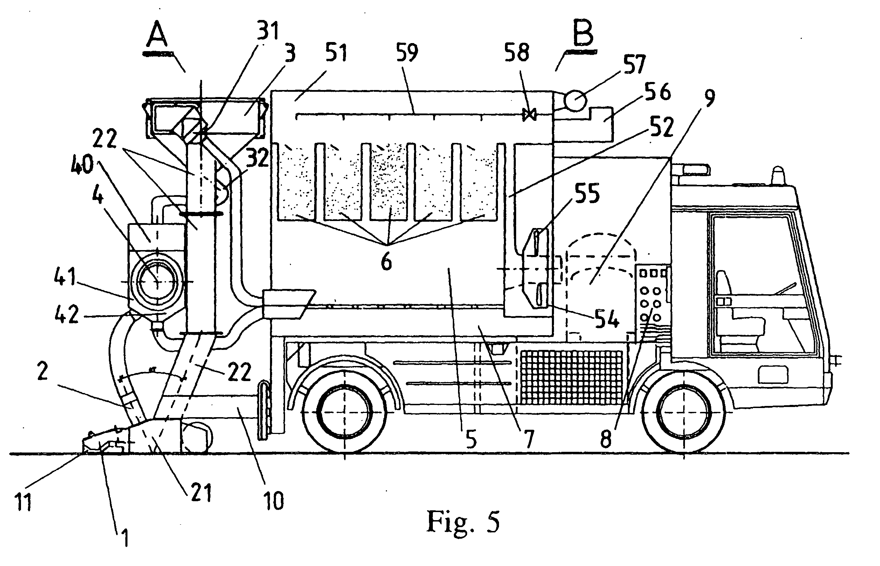

The shot-peening machine, Figure 5, consists of two units connected in 10 to each other; the first unit is a self-propelled multiturbine machine A in this case equipped with two power turbines 2 adapted to violently project the steel microballs against the surface to be treated and to recover them when rebounding by sucking, Figure 1; power and motion is generated by an internal combustion engine 9 having power of about 149 kW (200 HP), placed on the truck of the sucking unit B Figure 2 and this engine through a coupling not shown in the figures, transmits hydraulically the motion to the various members of the machine through hydraulic pumps, also not shown, each pump being intended for the corresponding part of the machine for its specific function; as the hydrostatic transmission is a single unit, it is autonomous; each turbine too receives power from a corresponding hydraulic pump through the hydrostatic coupling which is lubricated and cooled with oil, and the balls start from tank 41, reach the high power turbines 2 and are projected at very high velocity on the surface to be treated, then they rebound into the feeder 21 and are sucked; the size of the self-propelled shot-peening unit may reach 9m x 2.5m, with a weight of about 12 tons and an output of 149 Kw (200 Hp); the second unit consists of a sucking unit B mounted on a truck, in this case a three axes truck, provided with a bin 5, centrifugal fan 55 and a scroll 54, filter 6 and a container 7 for collecting and evacuating the waste product, such a unit comprises also the self-contained power generator 9 and the control and regulation electronic unit 8, Figures 2 and 4; the size is about 8.5m x 2.5m with a total weight of 25 tons and a power of 187 Kw (250 Hp).

In a different embodiment the plants may also be carried out on a powered independent frame provided that the solution of the hydrostatic transmission during operation of the self-propelled shot-peening machine is kept.

The mixture of microballs and impurities removed by the shot-peening operatich, starts then its ascent upwards in the diffuser 21, helped by a great portion of fresh air sucked from outside through the directional slots 11 of the inlet Figure 1; the increased ducts 21, 22, 22', 22" assure a considerable reduction of speed, that together with the fresh air sucked from outside tends to decrease the temperature of the balls that just ended their impact stage; at this point the mixture of fresh air, microballs and impurities continues its pass to the cyclone 3 of Figure 1, 3, 6.

In the cyclone a first separation is effected allowing the lighter parts and all the air to flow 31 to the aspirator, Figures 1, 3, 7.

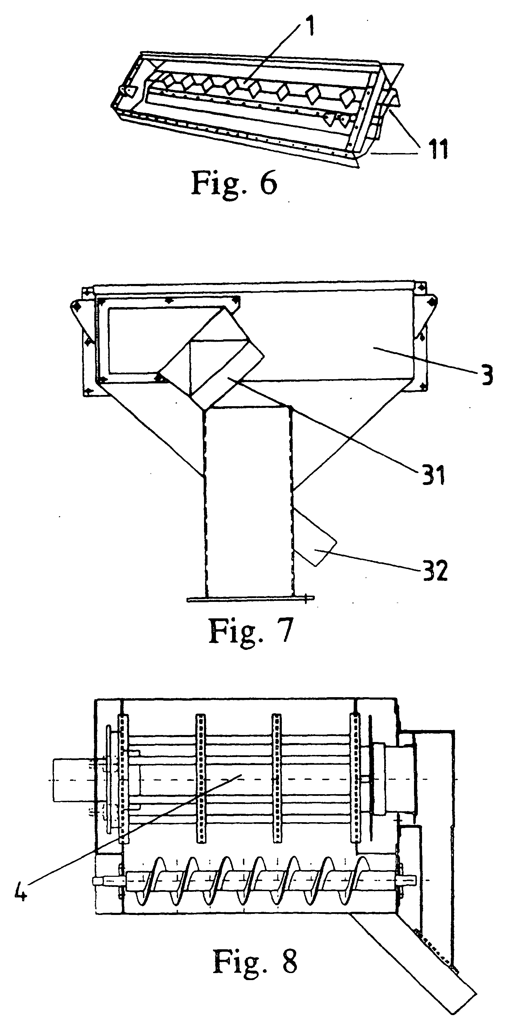

From here onwards microballs and heavier parts reach by gravity 32 the separator 40, comprising the screen 4, Figure 8, with an innovative three stage separation, allowing a very complete cleaning of the balls, the waste parts ending into the container 42 and are then conveyed to the container 7 of the second unit; this material is then discharged in a dump through said removable container 7, Figures 1, 2, 5. The treated balls can then reach easily the tank 41 that being increased allows that they can be used again and go on their cycle, Figure 1.

The lighter parts namely dust, at the outlet 31 of cyclone 3 go on their route to the sucking unit B of a novel construction to increase its autonomy of operation, but above all to reduce considerably work of filters 6 that are undergoing a severe trial for the quantity and quality of the air to be treated, so as to avoid clogging and the consequent failure with inevitable emission of untreated dust to the outside. The fan comprising the centrifugal fan 55 arranged in its scroll housing 54 is arranged inside a sheet bin 5 together with 18 filters 6 of polyester and causes dust aspiration; the fan is actuated hydraulically and has an output of at least 10,000m3/h and + 800mm water column. To avoid filter clogging there is an electronic control unit 8 that, in addition to handle all the parameters of regulation of the machine to be adjusted to the surface to be treated, through suitable detecting sensors arranged along the various units of the machine but not shown in the Figures, detects also the clogging degree of the filters coupled to a compressor 56 with the installation of a good washing unit. The compressor presses air required to wash the filter 6 in a tank 57 and the air is distributed through the washing valve 58 and the washing tube 59 in the vacuum chamber 51, dust depositing together with cleaning or treating waste downwards in the container 7, while the purified air flows through the feeder 52 and the scroll 54 to the outside, Figures 2, 4, 5.

The performance of the roughening treatment by means of the shot-peening machine is function of several factors as it was already mentioned and more particularly: operation must occur in dry conditions, because when there is humidity recovery of the balls and disposal of dust cause problems; performance on bituminous mix is higher at relatively low temperature like in the morning and the night, while high temperature hinders rebound of the balls; the practical performance depends also from traffic limitation, signalization display and distance of dust discharge in dump, if it is inert filler; consumption of microballs is about 100 g/m2. As an average it is possible to guarantee a daily output of 3,000-6,000m2 of treated surface with a speed from 3 to 6m/min. for a theoretical width of about 2m, actually 1.6m.

The considerable daily production together with an excellent handling of the machine, allows its use either in the case of wide surfaces to be roughened or in the case of speedy intervention for restoration of roughness on limited stretches. The process carried out by the machine is also totally noiseless and does not emit dust to the ambient so that it is useful also for urban surfaces. The results obtained on the surface characteristics of the paving are very encouraging and of high interest for traffic safety; more particularly the following results are to be found: a substantial increase of sand depth values; increase of the longitudinal and transversal friction coefficient; decrease of sound level, reduction of the water spray, very good resistance to skidding and derapage; excellent surface drainage due to a positive macro roughness, eliminating the risk of aquaplaning and water spray of vehicules when raining.

In the following table measurements effected by laboratories during tests conducted in the course of some trials carried out on different European motorway stretches and race tracks are cited and in this table the results before and after the roughening intervention are reported.

| Road Yard Tests | | Nr. of trials | Average before intervention | Average after intervention | Increase % |
|---|---|---|---|---|---|
| Racetrack | | | | | |
| 1) | Skid resistance | 26 | 53.1 | 73.6 | +39% |
| 2) | TML - TRRL | 7 | 0.4 | 0.66 | +64% |
| 3) | Sand depth | 7 | 0.64 | 1.47 | +130% |

| Motorway a) | | | | | |
|---|---|---|---|---|---|
| 1) | Skid resistance | 12 | 55.8 | 71.3 | +28% |
| 3) | Sand depth | | 0.29 | 0.52 | +79% |

| Motorway b) | | | | | |
|---|---|---|---|---|---|
| 1) | Skid resistance | | 37 | 86 | +132% |
| 2) TML - TRRL | | | 1.0 | 1.9 | +90% |
| 3) | Sand depth | | 0.7 | 1.2 | +71% |

| Motorway c) | | | | | |
|---|---|---|---|---|---|
| 1) | Skid resistance | | 38 | 64 | +68% |
| 2) | TML - TRRL | | 0.33 | 0.67 | +103% |
| 3) | Sand depth | | 0.46 | 1.00 | +117% |
| Test explanation: | | | | | |
| 1) Skid resistance: measurement of the surface roughness according to the British portable skid resistance tester; | | | | | |
| 2) TML - TRRL: Texture Meter Laser according to the English Transport and Road Research Laboratory; | | | | | |
| 3) Measurement of the surface macro roughness with the method of sand depth. | | | | | |

The roughening technique by high performance shot-peening can be used successfully besides restoring macro and micro roughness in restoration of road pavings as above described also in the following application fields:

Cleaning, preparing, degreasing and bushhammering of platbands made of concrete on viaducts, bridges, tunnels and other concrete structures such as tracks, parking places and so on.

In tunnels and viaducts where rainproofing is required to guarantee a long term work integrity, the treatment of the concrete structure is of fundamental importance. In order to guarantee a perfect cohesion between concrete and rain proofing material, the slab surface must be perfectly cleaned from any impurity and dressed so as to allow an anchorage resistance to stresses that can cause rips.

The shot-peening machine allows to remove the greasy and oily portions, rests of old waterproofing treatments, grout crust, rust of emerging reinforcing irons or any other material that could undermine adhesion, giving also to the surface a macro and micro rough texture that promotes adhesion of rainproofing materials. The high performance and total lack of rests of the treatment allows to program at the same time laying of sheets of liquid isolating products. The true advantage of this treatment anyway consists of the possibility to work in a dry condition so as to avoid the drawbacks of supplying and using big quantities of water, as well as the consequent problems of disposing thereof.

Cancellation of road signalization, brightening of the asphalt carpet, and cleaning of tunnel bright pavings respectively.

Removal of paints of all the horizontal signalizations from paving surface is very important both for visibility and clearness for the user and for preserving the road carpet, because paints or their component materials, have a tendency to rip the paving causing crackings promoting water seepage and consequently formation of cracks and decay. The shot-peening operation of the machine allows to remove in an optimal way the paint from the road surface without damaging it and causing dangerous steps.

### Airport applications

### a) Degumming

Most parts of rubber deposits are formed on a very delicate area of the airport runways namely the landing and take-off area; more particularly in conditions of wet runway these areas may be dangerous for a number of factors: the rubber deposits covering the runway surface nullify the effect given by the macro microtexture; rubber beside being waterproof in these conditions is also very slippery and promotes aquaplaning triggering; the area covered by rubber deposits undergoes an alteration of the water flowing plane that can promote formation of puddles with a further danger for the mechanical operation of the aircraft turbines.

With the shot-peening machine according to the invention it is now possible to totally remove the rubber deposits and give again at the same time to the paving the ideal grip and roughness values. The shot-peening operation does not cause tracks or gradient alterations. The water flowing plane in view of the macro roughness will be lower than the tire support plane so as to reduce aquaplaning probability.

Use of high performance machines up to 800 m2/h, the perfect cleaning of the treated surface and the quick movability of the vehicle, allow programming of interventions easily compatible with the needs of an airport.

### b) Cleaning of parking and refueling areas

For preserving paving either made of concrete or bituminous mix, it is necessary to clean periodically the parking and refueling areas for the aircrafts from oily and greasy substances and so on.

By the shot-peening operation of the machine it is possible to carry out an accurate cleaning without causing microcracks that could be particularly dangerous for structural and environmental purposes.

The high performance shot-peening machine according to the invention with a working width of 2 m, allows to apply the shot-peening technology and find new uses in the field of surface treatments. With a shot-peening intervention of said machine it is possible to restore texture and characteristics like a new paving with costs that are very lower than the traditional rebuilding interventions with less traffic troubles and shorter time, Figure 5.

## Claims

1. Mobile shot-peening machine for treating surfaces made of bituminous mix, asphalt, concrete or iron, comprising a shot-peening unit (A) and a sucking and filtering unit (B) joined to one another (10);
the shot-peening unit (A) consisting of:
- a feeder (1,11) suitably finned and shaped to take and direct flow of fresh air from outside;
- a group of high power aligned turbines (2) for projecting at very high velocity balls of a small diameter to the surface to be treated;
- a set of ducts (21, 22, 22', 22") for the passage of a mixture comprising microballs, air and impurities, said set of ducts (21, 22, 22', 22") is of increased diameter and length, and is suitably shaped so as to allow slowing down of its flow;
the sucking and filtering unit (B) consisting of:
- a bin (5) where the following members are arranged:
- an aspirator or fan (55) arranged in its box (54);
- a container (7) for accumulating filler;
- an auxiliary and autonomous high power generator (9) for distributing the motion through an hydrostatic transmission and hydraulic pumps to the various units of the machine;
**characterized in that**
said shot-peening unit (A) further comprises:
- a cyclone (3) for treating the mixture passed by the set of ducts (21, 22, 22', 22") and for a first separation of the heavier parts such as microballs and fillers from the lighter ones such as air and dust; and
- a high capacity separator (40) for the outflow of the heavy part microballs and aggregate provided by the cyclone (3), comprising a screen (4) for separating, cleaning and recycling microballs of the charge of aggregate, debris and impurities, wherein said microballs are provided into a tank (41), and wherein the charge of aggregate, debris and impurities is provided into a further container (42) for the evacuation;
and **in that** said sucking and filtering unit (B) further comprises:
- filters (6) for separating dust from air;
- filter cleaning means such as a compressor (56), a compressed air tank (57), a valve (58) and washing tube (59) with high increase of filtering surface and quality;
- a hydrostatic coupling for power transmission to all the users of the machine through hydraulic pumps; and
- an electronic unit (8) for controlling and regulating the various units or parts of the machine through measuring and control detecting sensors arranged therein;
- wherein said container is a removable container (7) for accumulating filler coming from separation effected by said screen (4) and deposit of dust coming from said cyclone (3) and by gravity through the cleaning air by filter (6) for their subsequent evacuation and ecological treatment in a dump.

2. Shot-peening machine according to claim 1, wherein the balls are steel microballs of a diameter between 1.1. and 2.0 mm which are to be projected at a velocity comprised between 180-190 m/sec., in an angle of incidence of 45° and with consumption lower than 100g/m².

3. Shot-peening machine according to claim 1 or 2, **characterized in that** it couples two turbines (2) aligned transversally having a power of 149 kW (200 Hp) and covering a working width up to 2 m.

4. Shot-peening machine according to any one of claims 1 to 3, **characterized in that** the sucking and filtering unit consists of: a centrifugal fan (55) hydraulically operated having an output of at least 10,000 m³/h and head of at least 800 m of water column, and 18 polyester filters (6) to increase the endurance, to reduce the work and to avoid their clogging for separating dust from air.

5. Shot-peening machine according to any one of claims 1 to 4, **characterized by** a daily output comprised between 3,000 and 6,000 m², with an advancement velocity comprised between 3 and 6 m/min and a working width of at least 2 m.

6. Process for treating surfaces made of bituminous mix, asphalt, concrete or iron by means of the shot-peening machine according to claim 1, **characterized by** the following steps:
a) bombarding the surface to be treated by microballs effected by projecting violently said microballs at very high velocity through turbines (2) picking them from tank (41), the impact of these microballs causing removal of the soft surface parts and so macro roughness, and hammering of hard parts cleaned without cracking, thus micro roughness, restoring the surface characteristic of the treated covers as to macro and micro roughness;
b) removal of debris and dust produced by the shot-peening operation on the treated surface and recovery at rebound of microballs by sucking a mixture comprising air, microballs and fillers;
c) conveying and slowing down said mixture by sucking through ducts (21, 22, 22', 22") suitably shaped and of increased size to avoid overheating and impurities on the microballs;
d) separation through the cyclone (3) of the heavier parts namely microballs and fillers through the outlet (32) into the separator (40), and of the lighter parts namely air and dust through the outlet (31) into the bin (5) for their corresponding treatment;
e) separation and cleaning of microballs from fillers through the screen (4) with passing said microballs into the tank (41) for their recycling and with passing said said fillers into the container (42) for their subsequent transfer to sucking unit (5), respectively;
f) sucking air and dust in the sucking unit (5) for purification of air and separation of dust through filter (6) and filter cleaning means (56, 57, 58) with fresh air and deposit of the dust in the removable container (7) for disposal.

7. Use of the high performance mobile shot-peening machine according to any of the preceding claims 1 to 5 in the roughening treatment of pavings with a low friction coefficient for roads and motorways, to restore ideal macro and micro roughness, to allow water drainage, avoiding aquaplaning and decreasing spray, assuring the dry contact between tire and surface granulate so as to increase grip and avoid derapage and lowering the sound level.

8. Use of the high performance mobile shot-peening machine according to any of claims 1 to 5 for cancellation of horizontal old signalization, cleaning and brightening the asphalt carpet of pavings, and of tunnel bright pavings respectively.

9. Use of the high performance mobile shot-peening machine according to any of claims 1 to 5 for cleaning, degreasing, preparing and bushhammering platbands made of concrete and iron for bridges, viaducts, tunnels, tracks and parking spaces.

10. Use of the high performance mobile shot-peening machine according to any of claims 1 to 5 in degumming runways of airports and cleaning and degreasing parking and refueling areas for aircrafts.

## Patentansprüche

1. Fahrbare kugelstrahlende Vorrichtung zur Behandlung von Flächen aus bituminöser Mischung, Asphalt, Beton oder Eisen, die eine kugelstrahlende Einheit (A) und eine Absaugens- und Filtereinheit (B) enthält, die zusammengebunden (10) sind;
die kugelstrahlende Einheit (A) besteht aus:
- einem passend berippten und geformten Speiser (1,11), zur Entnahme und Leitung des Flusses von frischer Luft von außen;
- einer Gruppe von axial ausgerichteten Hochleistungsturbinen (2) zum werfen von Kugel von kleine Durchmesser mit sehr hoher Geschwindigkeit gegen der Fläche, die behandelt wird;
- einem Satz von Röhren (21, 22, 22', 22") für den Durchlauf einer Mischung von Mikrokugeln, Luft und verunreinigungen; der obengenannte Satz von Röhren (21, 22, 22', 22") ist von steigendem Durchmesser und Länge und wird passend geformt, so dass die verlangsamung ihres Flusses erlaubt wird;
die Absaugens- und Filtereinheit (B) besteht auf:
- einem Behälter (5), wo die folgenden Teile gestellt werden:
- ein in seinem Gehäuse (54) gelegter Absauger oder Belüfter (55);
- ein Behälter (7) zur Sammlung des Füllers;
- ein selbständiger Hilfshochleistungsgenerator (5) zur verteilung der Bewegung an die verschiedenen Einheiten der Vorrichtung durch eine hydrostatische Kraftübertragung und hydraulische Pumpen;
von der Tatsache charakterisiert, dass
die obengenannte kugelstrahlende Einheit (A) weiter enthält:
- einen zyklon (3), zur Behandlung der durch den Satz von Röhren (21, 22, 22', 22") gelaufenen Mischung und zur ersten Trennung der schwereren Teile, wir Mikrokugel und Füller, von der leichteren, wie Luft und Pulver; und
- einen Hochleistungsscheider (40), zum Ausfluss der vom zyklon (3) kommenden schweren Teile, Mikrokugel und Aggregate, der einen Schieb (4) enthält, um die Mikrokugel vom Last von Aggregaten, Resten und verunreinigungen zu trennen, reinigen und wiederverwerten, wo die obengenannten Mikrokugeln in einem Behälter (41) gesammelt werden und der Last von Aggregaten, Resten und verunreinigungen in einem weiteren Behälter (42) zur Beseitigung gesammelt wird;
und die obengenannte Absaugens- und Filtereinheit (B) weiter enthält:
- Filter (6), um Pulver von Luft zu trennen;
- Reinigungsmittel der Filter, wie einen Kompressor (56), einen Behälter (57) von gedrückter Luft, einen Ventil (58) und einen waschrohr, mit erheblicher Steigerung der Filterfläche und -Qualität;
- eine hydrostatische Kupplung zur Kraftübertragung an allen Benutzer der Vorrichtung durch hydraulische Pumpen; und
- eine elektronische Steuerungseinheit (8), zur Steuerung und Regelung der verschiedenen Einheiten oder Teile der Vorrichtung durch dort gestellte Fühler und steuerungssensoren;
- wo der obengenannte Behälter ein abnehmbarer Behälter (7), zur Sammlung von Füller, der von der vom obengenannten Sieb (4) durchgeführten Trennung kommt, sowie zur Ablagerung von Pulver, das vom obengenannten zyklon (3) oder wegen Schwerkraft durch die Reinigungsluft der Filter (6) kommt, zu ihrem darauffolgenden Ausfluss und ihrer ökologischen Behandlung in einer Deponie, ist.

2. Kugelstrahlende vorrichtung gemäß dem Anspruch 1, wo die Kugel Mikrokugel aus Stahl mit einem Durchmesser zwischen 1,1 und 2,0 mm sind, die zu einer Geschwindigkeit von 180-190 m/s mit einem Einfallwinkel von 45° und mit einem verbrauch von wenig als 100 g/m² geworfen werden sollen.

3. Kugelstrahlende Vorrichtung gemäß dem Anspruch 1 oder 2, von der Tatsache charakterisiert, dass sie zwei axial ausgerichteten Turbinen (2) kuppelt, die eine Leistung von 149 KW (200 PS) haben und eine Arbeitsspannweite bis 2 m decken.

4. Kugelstrahlende Vorrichtung gemäß einem beliebigen Anspruch von 1 bis 3, von der Tatsache charakterisiert, dass die Absaugens- und Filtereinheit besteht aus: einem hydraulisch angetriebenen Fliehkraftlüfter (55), die eine Leistungsabgabe von mindestens 10000 m³/h und eine Förderhöhe von mindestens 800 mm Wassersäule hat, und 18 Filter aus Polyester (6), um die Lebensdauer zu vermehren, die Arbeit zu mindern und ihre Verstopfung für die Trennung von Pulver und Luft zu vermeiden.

5. Kugelstrahlende Vorrichtung gemäß einem beliebigen Anspruch von 1 bis 4, von einer zwischen 3000 und 6000 m² liegenden täglichen Leistungsausgabe charakterisiert, mit einer vorschubgeschwindigkeit, die zwischen 3 und 6 m/min liegt, und einer Arbeitsweite von mindestens 2 m.

6. Verfahren, zur Behandlung von Flächen aus bituminöser Mischung, Asphalt, Beton oder Eisen durch die kugelstrahlende Vorrichtung gemäß dem Anspruch 1, von den folgenden Stufen charakterisiert:
a) Beschießung der behandelten Fläche von Mikrokugel, die durch gewaltigem wurf der obengenannten Mikrokugel zu sehr hoher Geschwindigkeit durch Turbinen (2) erfolgt, die sie aus dem Behälter (41) nehmen; die Prallung dieser Mikrokugel verursacht die Entfernung der weichen Flachenteile (Makrorauhigkeiten), hämmert die gereinigten harten Teile, ohne sie zu spalten (Mikrorauhigkeiten), und wiederherstellt die Eigenschaften der Fläche der behandelten Decke, hinsichtlich Makro- und Mikrorauhigkeit;
b) Entfernung der von der Kugelstrahlung auf der behandelten Fläche erzeugten Reste und Pulver und Rückgewinnung bei der Rückprallung der Mikrokugel durch Absaugen einer Mischung von Luft, Mikrokugel und Füller;
c) Zufuhr und verlangsamen der obengenannten Mischung durch Absaugen durch passend geformte Röhre (21, 22, 22', 22") von steigender Größe, um überhitzung und verunreinigungen in den Mikrokugeln zu vermeiden;
d) Trennung durch den Zyklon (3) der schwersten Teile, nämlich Mikrokugeln und Füller, durch den Auslass (32) im Scheider (40) und der leichtesten Teile, nämlich Luft und Pulver, durch den Auslass (31) im Behälter (5) für ihre entsprechende Behandlung;
e) Trennung und Reinigung der Mikrokugel von Füller durch den Scheib (4), Sammlung der obengenannten Mikrokugel im Behälter (41) zu ihrer wiederverwertung und Sammlung der obengenannten Füller im Behälter (42) zu ihrer darauffolgenden übertragung nach der Absaugenseinheit (5);
f) Absaugen von Luft und Pulver in der Absaugenseinheit (5) zur Reinigung der Luft und Trennung des Pulver durch Filter (6) und Filterreinigungsmittel (56, 57, 58) mit frischer Luft und Ablagerung im abnehmbaren Behälter (7) zur Beseitigung.

7. Verwendung der beweglichen kugelstrahlenden Hochleistungsvorrichtung gemäß einem beliebigen Anspruch von 1 bis 5 in der Rauhensbehandlung von Straßendecke mit einem niedrigen Reibungskoeffizient für Straßen und Autobahnen, um die idealen Makro- und Mikrorauhigkeit wiederherstellen, die wasserdrainage zu erlauben, Aquaplaning zu vermeiden und Sprüh zu mindern, den trockenen Kontakt zwischen Reifen und Deckengranulat zu gewahren, sowie Griff zu steigern und Schleudern zu verhindern, und schallpegel zu niedrigen.

8. Verwendung der beweglichen kugelstrahlenden Hochleistungsvorrichtung gemäß einem beliebigen Anspruch von 1 bis 5 zur Löschung der alten Bodenmarkierung, zur Reinigung und Aufhellung des Asphaltüberzug und von hellen Straßendecken in Tunnel.

9. Verwendung der beweglichen kugelstrahlenden Hochleistungsvorrichtung gemäß einem beliebigen Anspruch von 1 bis 5 zur Säuberung, vorbereitung, Entfettung und Stocken von Betongurtplatten von viadukten, Brücken, Tunnel, Rennbahnen und Parkplätzen.

10. Verwendung der beweglichen kugelstrahlenden Hochleistungsvorrichtung gemäß einem beliebigen Anspruch von 1 bis 5 zum Degummieren von Flughafenstart/Landbahnen und zur Säuberung und Entfettung von Park- und Betankungsplätze für Flugzeugen.

## Revendications

1. Machine à grenailler mobile pour le traitement des surfaces en enrobé, asphalte, béton ou fer, comprenant une unité de grenaillage (A) et une unité d'aspiration et de filtrage (B), connectées l'une à l'autre (10);
l'unité de grenaillage (A) comprenant:
- un convoyeur d'entrée (1, 11), avec des déflecteurs convenables et opportunément conformé, pour prélever et diriger le flux d'air frais de l'extérieur;
- un group de multi-turbines alignées à haute puissance (2) pour projeter des balles de petit diamètre à très haute vitesse sur la surface à traiter;
- une série de tuyaux (21, 22, 22', 22") pour le passage du mélange de micro-balles, air et impuretés, la dite série de tuyaux (21, 22, 22', 22" est d'un diamètre et d'une longueur, qui augmentent, et est convenablement formée pour permettre le ralentissement du flux du mélange;
l'unité d'aspiration et de filtrage (B) comprenant:
- un caisson (5), où les parts suivantes sont logées:
- un aspirateur ou ventilateur (55), logé dans sa caisse
- une boîte (7) pour recueillir les remplisseurs;
- un générateur autonome auxiliaire à haute puissance (9) pour la distribution du mouvement aux différentes unités de la machine par une transmission hydrostatique et des pompes hydrauliques;
**caractérisée par le fait, que**
la dite unité de grenaillage (A) comprend aussi:
- un séparateur cyclonique (3) pour le traitement du mélange passé à travers la série de tuyaux (21, 22, 22', 22") et pour une première séparation des parts plus lourdes comme micro-balles et remplisseurs des parts plus légères comme air et poussière; et
- un séparateur (40) à haute capacité pour l'écoulement des parts lourdes, micro-balles et agrégats, provenant du séparateur cyclonique (3), qui comprend un crible (4) pour la séparation, le nettoyage et le recyclage des micro-balles, des agrégats, restes et impuretés, où les micro-balles sont convoyées dans un réservoir (41) et le charge d'agrégats, restes et impuretés est convoyé dans un autre réservoir (42) pour leur évacuation;
et la dite unité d'aspiration et de filtrage (B) comprend aussi:
- des filtres (6) pour séparer la poussière de l'air;
- des moyens de nettoyage des filtres, comme un compresseur (56), un réservoir d'air comprimé (57), un clapet (58) et un tuyau de lavage (59) avec une grande augmentation de surface et de qualité filtrante;
- un coupleur hydrostatique pour la transmission de puissance à tous les usagers de la machine à moyen de pompes hydrauliques; et
- une unité électronique (8) pour contrôler et régler les différentes unités ou parts de la machine par des capteurs de mesure et de contrôle arrangés dans les parts mêmes;
- où la dite boîte est une boîte amovible (7) pour accumuler les remplisseurs, qui arrivent de la séparation effectuée par le dite crible (4) et pour déposer des poussières, qui arrivent du dit séparateur cyclonique (3) et par gravité au moyen d'air de lavage des filtres (6) pour leur successive évacuation et traitement écologique dans le dépotoir

2. Machine à grenailler selon la revendication 1, où les balles sont micro-balles en acier, d'un diamètre entre 1,1 et 2 mm, qui sont projetées à une vitesse comprise entre 180-190 m/s, selon un angle d'incidence de 45° et avec une consommation inférieure à 100 g/m².

3. Machine à grenailler selon la revendication 1 ou 2, **caractérisée par le fait qu'**il couple deux turbines (2) alignée transversalement, ayant une puissance de 149 KW (200 cv) et couvrant une largeur de travail jusqu'à 2 m.

4. Machine à grenailler selon une quelconque des revendications de 1 à 3, **caractérisée par le fait que** l'unité d'aspiration et filtrage comprend: un ventilateur centrifuge (55), opéré par voie hydraulique, ayant un débit d'au moins 10000 m³/h et une hauteur de refoulement d'au moins 800 mm de colonne d'eau, et 18 filtres (6) de polyester pour augmenter la durée, réduire le travail et éviter leur engorgement dans la séparation des poussières de l'air.

5. Machine à grenailler selon une quelconque des revendications de 1 à 4, **caractérisée par** une production journalière comprise entre 3000 et 6000 m², avec une vitesse d'avancement comprise entre 3 et 6 m/min et une largeur de travail d'au moins 2 m.

6. Procès pour le traitement de surfaces en enrobé, asphalte, béton ou fer par la machine à grenailler selon la revendication 1, **caractérisé par** les phases suivantes:
a) bombardement de surface à traiter par des micro-balles, effectué par projection violente des dites micro-balles à vitesse très élevée au moyen de turbines(2), les prélevant du réservoir (41), l'impact de ces micro-balles causant l'enlèvement des parts moues, donc macro-rugosité, et le martèlement des parts dures nettoyées sans les casser, donc micro-rugosité, rétablissant les caractéristiques des couches traitées, du point de vue de la macro et micro-rugosité;
b) enlèvement des restes et des poussières produits par l'opération de grenaillage sur la surface traitée et récupération des micro-balles au rebond par aspiration d'un mélange comprenant air, micro-balles et remplisseurs;
c) canalisation et ralentissement dudit mélange par aspiration par tuyaux (21, 22, 22', 22"), convenablement formés et de dimension, qui augment, pour éviter surchauffe et impuretés sur les micro-balles;
d) séparation par le séparateur cyclonique (3) des parts plus lourdes, notamment micro-balles et remplisseurs à travers la vidange (32) dans le séparateur (40) et des parts plus légères, notamment et poussières à travers la vidange (31) dans le caisson (5) pour leur traitement correspondant;
e) séparation et nettoyage des micro-balles des remplisseurs par le crible (4) avec le passage desdites micro-balles dans le réservoir (41) pour leur recyclage et avec le passage desdits remplisseurs dans le réservoir (42) pour leur subséquent déplacement à l'unité d'aspiration (5);
f) aspiration de l'air et des poussières dans l'unité d'aspiration (5) pour la purification de l'air et la séparation des poussières par les filtres (6) et les moyens de nettoyage des filtres (56, 57, 58) par de l'air frais et dépôt des poussières dans la boîte amovible (7) pour leur évacuation.

7. Utilisation de la machine à grenailler mobile à haute performance selon une quelconque des revendications précédentes de 1 à 5 dans le traitement d'augmentation de la rugosité de chaussée avec un bas coefficient d'adhérence pour routes et autoroutes, pour rétablir la macro et micro-rugosité idéale, pour permettre le drainage de l'eau, en évitant l'aquaplanage et diminuant les giclées, assurant le contact sec entre le pneu et le granulat de surface, augmentant l'adhérence et évitant le dérapage et diminuant le niveau du son.

8. utilisation de la machine à grenailler mobile à haute performance selon une quelconque des revendications précédentes de 1 à 5 pour l'effacement des vieux signaux routiers horizontaux, nettoyant et éclaircissant la couche d'asphalte des chaussées et la chaussée claire des tunnels.

9. Utilisation de la machine à grenailler mobile à haute performance selon une quelconque des revendications précédentes de 1 à 5 pour le nettoyage, le dégraissage, la préparation et le bouchardage des plate-bandes en béton et fer pour ponts, viaducs, tunnels, pistes et places de stationnement.

10. utilisation de la machine à grenailler mobile à haute performance selon une quelconque des revendications précédentes de 1 à 5 pour le dégommage des pistes des aéroports et le nettoyage et dégraissage des zones de stationnement et ravitaillement des avions.
